# EUROPÄISCHE PATENTANMELDUNG

(11) **EP 4 640 326 A1**
(43) Veröffentlichungstag der Anmeldung: **29.10.2025**
(21) Anmeldenummer: 25172336.7
(22) Anmeldetag: 24.04.2025
(51) Int. Cl.: B09B 3/30, B07B 13/00

(54) **EXTRAKTIONSVORRICHTUNG**

(30) Priorität: 26.04.2024 DE 102024111820
(71) Anmelder: HAAS Holzzerkleinerungs- und Fördertechnik GmbH, 56472 Dreisbach (DE)
(72) Erfinder: HAAS, Volker, 56224 Hahn am See (DE)
(74) Vertreter: Gramm, Lins & Partner Patent- und Rechtsanwälte PartGmbB

(57) **Zusammenfassung**

Die Erfindung betrifft eine Extraktion-Vorrichtung 1 zum Aussortieren von strippenförmigen, bandförmigen oder zumindest wickelfähigen fähigen Abfällen (Störstoffe) aus einem Abfall-Stoffstrom umfassend Holz.

Der Abfall-Stoffstrom passiert von einer Vorstufe kommend einen die Extraktion-Vorrichtung 1 definierten Extraktion-Raum 2 passiert.

Gemäß der Erfindung umfasst die Extraktionsvorrichtung 1 eine sich quer durch den Extraktion-Raum 2 erstreckende Extraktion-Welle 2, welche sich entlang einer Wellenlängsachse erstreckt, beabstandet zueinander angeordnete Wellen-Enden aufweist sowie mehrere sich beabstandet zueinander im Wesentlichen quer zur Wellenlängsachse erstreckende Extraktions-Finger 6.1 umfasst. Die Extraktions-Welle 6 ist drehbar in einem Extraktion-Gehäuse 4 angeordnet, welches den Extraktions-Raum 2 vorzugsweise umfänglich an allen Seiten umschließt. Ferner ist mindestens eines der Wellenenden der Extraktion-Welle 6 durch einen Antrieb angetrieben.

## Beschreibung

Im Allgemeinen betrifft die vorliegende Erfindung eine Vorrichtung zur Verbesserung der Sortierungsleistung in einer Abfall-Sortieranlage. Umgangssprachlich betrifft die Erfindung eine Vorrichtung zur Verbesserung der Abfallsortierung oder Müllsortierung.

Im Speziellen betrifft die Erfindung eine Extraktions-Vorrichtung oder zum Aussortieren von Strippen-förmigen, bandförmigen oder zumindest wickelfähigen Abfällen aus einem Abfall-Stoffstrom umfassend, insbesondere einem Holzstrom umfassend vorzugsweise vorwiegend zerkleinertes Holz, wobei der Abfalls-Stoffstrom von mindestens einer Vorstufe kommend einen durch die Extraktions-Vorrichtung definierten Extraktions-Raum passiert.

Gattungsgemäßer Stand der Technik ist offenbart in DE 40 42 227 A1.

Der Extraktions-Raum ist also ein definierter, dreidimensionaler Raum, durch welchen der Abfall-Stoffstrom hindurchtritt, diesen also passiert, vorzugsweise von oben kommend vertikal oder im Wesentlichen vertikal herabfällt.

Eine solche Vorrichtung ist also integriert bzw. Bestandteil einer Abfallsortierungsanlage, sei diese fest installiert oder mobil. In eine solche Abfall- oder Müllsortierungsanlage werden Abfälle aller Größen eingebracht. In der vorliegenden Ausführungsform sind insbesondere Gewerbeabfälle umfassend Holz relevant.

In der Abfallsortieranlage erfolgt üblicherweise in einer ersten Zerkleinerung eine Reduzierung der Korngröße der Abfälle auf 3 bis 500 mm. Für Holzabfälle wird hierzu bevorzugt ein Doppel-Wellenbrecher eingesetzt.

In einer zweiten Verfahrensstufe werden Eisenteile aus dem Stoffstrom, insbesondere Holz-Abfallstrom herausgefiltert oder entfernt. Dieses erfolgt üblicherweise über einen Magnet-Abscheider.

In einer dritten Verfahrensstufe wird der Abfall-Stoffstrom weiter zerkleinert (Nachzerkleinerung), was üblicherweise über eine Nachzerkleinerungsmühle, Einzelwellen-, Doppel- oder vier Wellenmaschine erfolgt, aus welcher der Stoffstrom bzw. der Abfallstrom sodann mit einer Korngröße von 0-50 bzw. 0-100 mm Korngröße austritt.

### Technisches Problem

Bei bestehenden Abfallsortier- oder Abfalltrennen-Anlagen besteht das Problem, dass längliche, strippenförmige Gebilde, wie z.B. Seile, Bänder, Kabel, aber auch die wickelfähigen Gegenstände, wie z.B. Säcke, insbesondere aus reißfestem Material bestehende Abfallsäcke (bezeichnet als "Big-Bags") sich um rotierende Teile in der Abfallsortierungsanlage wickeln können und dabei insbesondere die seitlichen Lager und Dichtungen der Wellen blockieren oder beschädigen können oder sich z.B. um Schneckenbäume wickeln, die dann zur kompletten Blockade führen. Diese länglichen, wickelfähigen Gegenstände werden im Sinne der Erfindung zusammenfassend als "Störstoffe" bezeichnet, weil diese die Leistungsfähigkeit der Abfallsortierung negativ beeinflussen können.

### Aufgabe

Ausgehend von dem zuvor dargestellten Stand der Technik und der damit verbundenen Nachteilen liegt der Erfindung somit die Aufgabe zugrunde, die vorgenannten Nachteile zumindest teilweise zu vermeiden und eine Vorrichtung für eine Abfallsortierungsanlage vorzusehen, welche die vorgenannte definierten Störstoffe aussortiert.

### Erfindung

Gelöst wird dieses durch die Kombination der Merkmale der unabhängigen Ansprüche. Bevorzugte, aber nicht zwingende, also fakultative Merkmale sind in den Unteransprüchen wiedergegeben.

In der abstraktesten Ausführungsform wird die Aufgabe bereits dadurch gelöst, dass eine sich quer durch den Extraktions-Raum erstreckende Extraktion-Welle vorgesehen ist, welche sich entlang einer Wellenlängsachse erstreckt, beabstandet zueinander angeordnete Wellenenden aufweist sowie mehrere sich beabstandet zueinander im Wesentlichen quer zur Wellenlängsachse erstreckende Extraktions-Finger umfasst, dass die Extraktions-Welle drehbar in einem Extraktions-Gehäuse angeordnet ist, welches den Extraktion-Raum vorzugsweise umfänglich an allen Seiten umschließt und dass zumindest eines der Wellenenden der Extraktions-Welle durch einen Antrieb antreibt oder angetrieben ist. Das Extraktions-Gehäuse umschließt erfindungsgemäß also den Extraktions-Raum, durch welchen die Abfallstoffe passieren. Schlagwortartig kann die Erfindung auch als "Strippenfinder" bezeichnet werden.

Bei der Drehung der Extraktions-Welle in dem Extraktions-Gehäuse bzw. in dem Extraktions-Raum definiert und umschlossen durch das umschließende Extraktions-Gehäuse drehen sich die Extraktion-Finger in dem Abfall-Stoffstrom, an denen sich die Störstoffe verfangen oder hängen bleiben und bei Drehung der Extraktions-Welle um diese Extraktions-Welle wickeln. In vordefinierten Zeitabständen kann die Extraktions-Welle aus der Extraktions-Vorrichtung entfernt werden, womit die aufgewickelten Störstoffe auf einfache Weise entnommen werden und durch eine neue Extraktions-Welle ersetzt werden. Wegen den Extraktions-Fingern kann die Extraktion-Welle auch als "Finger-Welle" bezeichnet werden.

Vorzugsweise wird der Strippenfinder in einem Fallschacht nach einem Vorbrecher und vor einer Nachzerkleinerung in einer Abfallsortieranlage angeordnet.

Zur Vereinfachung des Wechsels der Extraktions-Welle bzw. Fingerwelle ist diese vorzugsweise lösbar auf in dem Extraktion-Gehäuse gelagerten Wellenstrümpfen oder dergleichen verbindbar oder verbunden. Dabei hat es sich als besonders zweckmäßig erwiesen, die Extraktions-Welle mit den drehbar in dem Extraktions-Gehäuse aufgenommenen Wellenstümpfen zu verstehen. Bei der bevorzugten Ausführungsform weisen die Extraktions-Welle und die Wellenstümpfe komplementär ausgebildete Geometrien auf, welche in Einbaulage Form- und/oder kraftschlüssig zusammenwirken. Besonders bevorzugt umfassen die oder der Wellenstumpf einen zylindrischen Lagerabschnitt, mit welchem dieser in dem Gehäuse drehbar gelagert ist, und einen mit den Wellenenden verbindbaren Wellenabschnitt, der in die Wellenenden in Einbaulage, also bei in die Extraktions-Vorrichtung eingesetzter Extraktions-Welle, drehfest mit der Extraktions-Welle verbindet. Vorzugsweise sind die Wellenabschnitte der Wellenstümpfe und der Wellenenden der Extraktionswelle so komplementär ausgebildet, dass diese sich in Einbaulage zu einer Wellengeometrie zusammenfügen, z.B. durch zwei komplementär ausgebildete Halbwellen, die zusammengesetzt in Einbaulage die Wellengeometrie ergeben. Die lösbare Fixierung der Extraktions-Welle mit den Wellenstümpfen erfolgt vorzugsweise über in die Fügepartner einsteckbare Arretierbolzen, die über einen Splint, mit einer Rastverbindung oder anderer Weise gesichert werden.

Zum Schutz der Wellenstumpfe ist es besonders zweckmäßig, wenn die Lagerung der Wellenstümpfe außerhalb des Extraktions-Raums an der Außenseite von Gehäusewänden erfolgt, welche den Extraktions-Raum umschließen. Dadurch kann in jedem Fall ein Verwickeln von den Störstoffen und eine Beschädigung der Wellen und der Dichtungen an den Wellen verhindert werden.

Das Extraktions-Gehäuse umfasst vorzugsweise mindestens eine bewegliche, vorzugsweise abkappbare oder aufklappbare Gehäusewand, welche geöffnet werden kann zum Zugang zu dem Extraktions-Raum und der Extraktion-Welle, um somit die Extraktions-Welle auswechseln und warten zu können.

Üblicherweise umfasst der Antrieb der Extraktions-Welle einen Motor, insbesondere einen Elektromotor sowie ein Getriebe zur Regelung der Drehzahl.

Die Besonderheit der erfindungsgemäßen Extraktions-Vorrichtung liegt darin, dass diese bei bestehenden Abfallsortierung-Anlagen auch einfach nachgerüstet werden kann, indem das Extraktions-Gehäuse in den Stoffstrom eingebaut wird, insbesondere in einem Bereich, in welchem der Abfall-Stoffstrom herabfällt.

Als besonders zweckmäßig hat es sich erwiesen, dass das Extraktions-Gehäuse einen Fallschacht oder zumindest einen Teil eines Fallschacht darstellt, der z.B. nach einem vorbrachte unten vor einer Nachzerkleinerung angeordnet sein kann oder ist.

Da es vorkommen kann, dass sich der Abfall-Stoffstrom räumlich verlagert, also an verschiedenen Stellen in dem von dem Extraktions-Gehäuse umschlossenen Extraktions-Raum herabfällt oder diesen passiert, kann die Extraktions-Welle auch beweglich in dem Extraktions-Gehäuse angeordnet sein, vorzugsweise ist die Extraktion-Welle entlang einer Längserstreckungsrichtung des Extraktions-Gehäuses bzw. des Extraktions-Raums verstellbar oder bewegbar auszugestalten. Im Rahmen der üblichen Anwendung hat es sich dabei als ein Verstreichen von ca. 100 mm in beiden Richtungen als zweckmäßig erwiesen, sodass also ein Gesamt verstellte Bereich entlang der längs Erstreckungsrichtung des Extraktion-Gehäuses von 200 mm besteht. Dieses ist jedoch nicht zwingend, sondern von der Ausgestaltung der Anlage abhängig.

Eine Verbesserung der Extraktions- oder Abscheideleistung kann erzielt werden durch Verstellen der Extraktions-Finger im Verhältnis zur oder entlang zur Extraktions-Welle, was bei einer bevorzugten Weiterentwicklung der Fall ist.

Die Extraktions-Leistung kann auch durch Verstellen der Länge der Extraktions-Finger verbessert werden. Daneben betrifft die Erfindung eine Abfallsortieranlage oder eine Abfall-Treppenanlage umfassend eine der zuvor beschriebenen Extraktion-Vorrichtungen, welche man vereinfacht auch als Wickelvorrichtung bezeichnen kann.

Bei einer Weiterentwicklung können auch mehrere der vorgenannten Wickelvorrichtung bzw. Extraktions-Vorrichtungen in einer solchen Abfall-Sortieranlage vorgesehen sein, vorzugsweise vor jeden nächsten wesentlichen Verfahrensschritt.

In der folgenden, ausführlichen Figurenbeschreibung wird auf die beigefügten Zeichnungen Bezug genommen, die Teil dieser Erfindungsbeschreibung bilden und in denen zur Veranschaulichung spezifischer Ausführungsformen gezeigt sind, mit denen die Erfindung ausgeübt werden kann. In dieser Hinsicht wird Richtungsterminologie, wie etwa "oben", "unten", "vorne", "hinten", "vorderes", "hinteres", usw. in Bezug auf die Orientierungen der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im "Wesentlichen und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

In den Figuren werden identische oder ähnliche Elemente mit identischem Bezugszeichen versehen, soweit dieses zweckmäßig ist.

Bezugszeichenlinien sind Linien, die das Bezugszeichen mit dem betreffenden Teil verbinden. Ein Pfeil hingegen, der kein Teil berührt, bezieht sich auf eine gesamte Einheit, auf die er gerichtet ist.

Die Darstellungen in den Figuren sind im Übrigen nicht unbedingt maßstäblich. Zur Veranschaulichung von Details können bestimmte Bereiche übertrieben groß dargestellt sein. Darüber hinaus können die Zeichnungen plakativ vereinfacht sein und enthalten nicht jedes bei der praktischen Ausführung gegebenenfalls vorhandene Detail.

Das erfindungsgemäße Extraktions-Vorrichtung wird nachfolgend beispielhaft anhand der Figuren beschrieben. Sämtliche Merkmale der jeweiligen Ausführungsbeispiel seien hierbei für sich eigenständig und unabhängig von anderen Merkmalen des jeweiligen Ausführungsbeispiels offenbart.

Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Figur 1: eine Frontansicht einer erfindungsgemäßen Extraktions-Vorrichtung;
- Figur 2: eine Seitenansicht der Extraktions-Vorrichtung gemäß Figur 1;
- Figur 3: eine Draufsicht der Extraktions-Vorrichtung gemäß Figur 1;
- Figur 4: eine isometrische Frontansicht der Extraktions-Welle ("Fingerwelle") im ausgebauten Zustand;
- Figur 5: eine isometrische Seitenansicht einer alternativen aus Ausführungsform der Extraktions-Vorrichtung;
- Figur 6: eine isometrische Seitenansicht vom gegenüberliegenden Ende gemäß der Darstellung von Figur 5; und
- Figur 7: eine Abfallsortieranlage umfassend zwei der vorgenannten Extraktions-Vorrichtungen.

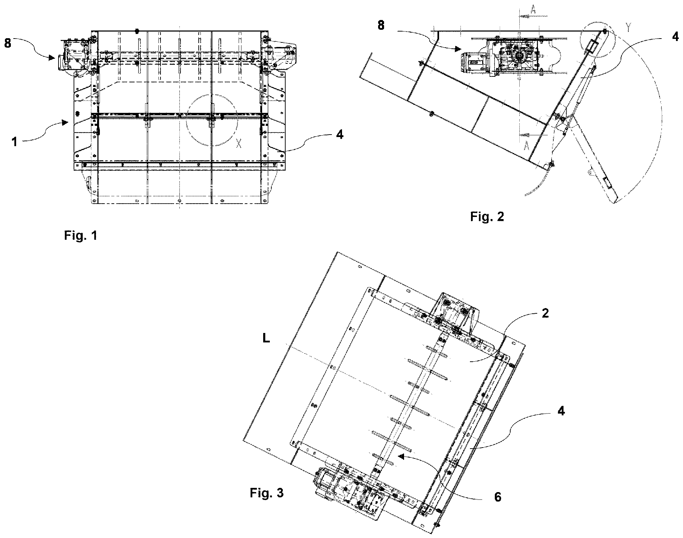

Demnach umfasst die in Ihrer Gesamtheit mit 1 bezeichnete, erfindungsgemäße Extraktions-Vorrichtung 1 gemäß den Figuren 1-3 im Wesentlichen ein einen Extraktions-Raum 2 umschließendes Extraktions-Gehäuse 4, dass zudem eine sich quer zur Längsrichtung erstreckende Extraktions-Welle 6 umfasst.

Das Extraktion-Gehäuse 4 ist zusammengesetzt aus gewinkelten Stahlprofilen und definiert die Wände, welche den rechteckigen Extraktions-Raum 2 außenseitig umschließen bzw. einfassen. Die Wände des Extraktions-Gehäuses 4 sind an den oberen und unten unteren Enden jeweils abgewinkelt zur Bildung eines oberen Befestigungsflansches und eines größeren, unteren Befestigungsflansches. Mit diesem Flanschen kann das Extraktion-Gehäuse 4 an anderen Maschinenteilen befestigt, also angeflanscht und festgeschraubt werden. Die Geometrie und die Abmessungen des Extraktions-Gehäuses 4 sind naturgemäß beliebig wählbar und durch den Einsatzzweck bestimmt.

Die Extraktions-Welle 6, die auch als "Fingerwelle" bezeichnet werden kann, umfasst eine sich entlang der Längserstreckungsrichtung dieser Extraktions-Welle 6 erstreckende Hohlwelle, in der vorliegend in definierten Abständen jeweils um 90° angrenzend zueinander versetzt angeordnete Finger 6.1 quer erstreckend zur Längserstreckungsrichtung der Extraktion-Welle 6 angeordnet sind. Jeweils aneinander angrenzende Finger 6.1 (nur eine gekennzeichnet) sind zudem jeweils um 90 Grad versetzt um die Längsachse der Extraktions-Welle 6 zueinander angeordnet, um einen möglichst großen, umfänglichen Raum abzudecken.

Angetrieben wird die Extraktion-Welle 6 durch einen seitlich an dem Extraktion-Gehäuse 4 über einen Montagewinkel eingeschraubten Elektromotor 8 mit einem zwischengeschalteten Getriebe. Zudem sind in den seitlichen Teilen des Extraktion-Gehäuses 4, welche die Extraktion-Welle 6 aufnehmen in der Längsrichtung L verlaufende Verstellschlitze ausgebildet, sodass die Extraktion-Welle 6 entlang der Längserstreckungsrichtung L verstellbar ist oder verstellt werden kann, um die Extraktion-Welle 6 so möglichst mittig innerhalb des den Extraktion-Raum 2 passierenden Abfallstrom anzuordnen und somit die Abscheideleistung angepasst an den Abfallstrom zu optimieren. Bei einer Weiterentwicklung kann über eine Kamera oder eine Anordnung von Laser-Sensoren der Abfallstrom erfasst und die Stellung der Extraktions-Welle 6 an diesen Abfallstrom angepasst werden.

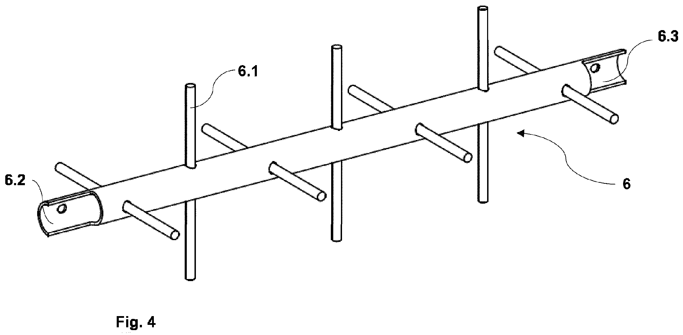

Figur 4 zeigt eine isometrische, vergrößerte Frontansicht der Extraktion-Welle 6 in Alleinstellung. Demnach umfasst die Extraktion-Welle 6 an den Wellenenden Ausnehmungen oder Ausklinkungen 6.2, 6.3 in der Größe der Hälfte des Wellendurchmessers der Extraktions-Welle 6, in welche dann die in den seitlichen Gehäuseteilen des Extraktion-Gehäuses 4 drehbar gelagerten Wellenstumpfe sitzen, um somit durch Einstecken von Fixierungsbolzen in entsprechende Löcher und Splinte eine drehfeste Verbindung zwischen den drehbar in dem Extraktion-Gehäuse 4 gelagerten Wellenstumpfen und der Extraktion-Welle 6 zu realisieren.

Wie aus der Figur 2 ersichtlich ist, ist das Vorderende des Extraktion-Gehäuses 4 herunterklappbar (dargestellt durch die gestrichelte Linie der in der Figur rechtseitigen Wand, um somit Zugang zu dem Extraktion-Raum 2 des Extraktion-Gehäuses 4 zu erhalten, um somit die Extraktion-Welle 6 aus dem Extraktion-Raum 2 entfernen zu können und durch eine neue Extraktions-Welle 6 zu ersetzen.

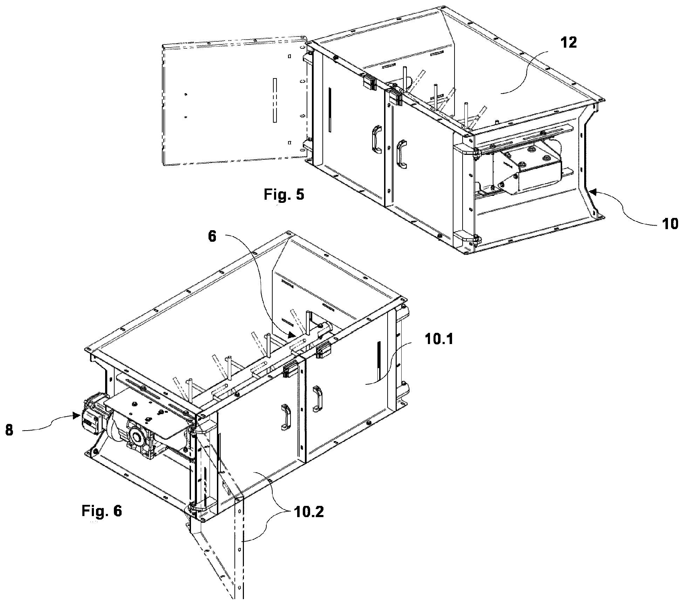

Die in den Figuren 5 und 6 dargestellte alternative Ausführungsform der Extraktions-Vorrichtung unterscheidet sich von der zuvor beschriebenen, ersten Ausführungsform Wesentlich nur durch die geometrische ausgestellte Gestaltung des Extraktions-Gehäuses 10, welches in der Ausführungsform gemäß den Figuren 1 bis 3 von der Höhe her auf allen Seiten gleichhohe Wandelemente des Extraktion-Gehäuses 10 aufweist. In gleicher Weise wie bei der Ausführungsform gemäß den Figuren 1 bis 3 ist innerhalb des durch das Extraktions-Gehäuse 10 umschlossenen Extraktions-Raum 12 die drehbar und motorisch angetriebene Extraktion-Welle 6 angeordnet, was auch bei dieser Ausführungsform durch einen seitlich an dem Extraktions-Gehäuse 10 angeflanschten Elektromotor 8 erfolgt. Ein weiterer Unterschied dieser zweiten Ausführungsform besteht darin, dass die Vorderseite zwei Türen 10.1, 10.2 aufweist, die seitlich an dem Extraktions-Gehäuse 10 drehbar angelenkt sind für den Zugang zu dem Extraktion-Raum 12 und Auswechseln der Extraktions-Welle 6, wobei die in den Figuren linksseitige Tür 10.2 in Volllinie geschlossen und in gestrichelt geöffnet dargestellt ist.

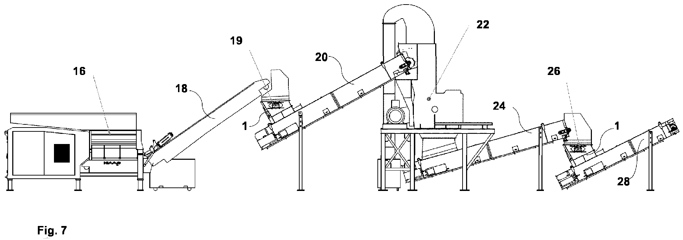

Figur 7 zeigt schließlich eine Seitenansicht einer Abfallsortieranlage umfassend zwei der in den Figuren 1 - 3 dargestellten Extraktions-Vorrichtungen 1. Die Abfallsortieranlage umfasst im ersten Verfahrensschritt eine Vorzerkleinerung 16 für den üblicherweise hausmüllähnlichen Gewerbeabfall, umfassend Holzteile.

Das zerkleinerte Material wird sodann über einen ersten Bandförderer 18 zu einem Gewebe- und Folien Separator 19 mit einem von dem ersten Bandförderer 18 nach unten sich erstreckenden Schacht befördert, an welchen sich die erste erfindungsgemäße Extraktions-Vorrichtung 1 anschließt.

Nach dem Hindurchtreten durch den Extraktion-Raum 2 der ersten Extraktions-Vorrichtung 1 fällt der Abfall-Stoffstrom sodann auf einen zweiten Bandförderer 20, welcher den Abfall-Stoffstrom sodann einem Nachzerkleinerer 22 zuführt.

Der aus diesem Nachzerkleinerer 22 austretende Abfall-Stoffstrom wird wiederum auf einen dritten Bandförderer 24 aufgebracht, welcher den Abfall-Stoffstrom einer zweiten Gewebe- und Folien-Sortierer 26 mit einer zweiten Extraktions-Vorrichtung 1 zuführt. Schließlich fällt der nunmehr gereinigte Stoffstrom auf einen vierten Bandförderer 28, welcher den Abfall-Stoffstrom auswirft.

Der Gegenstand der vorliegenden Erfindung ergibt sich nicht nur aus dem Gegenstand der einzelnen Patentansprüche, sondern aus der Kombination der einzelnen Patentansprüche untereinander. Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

### Figurenbeschreibung

- L: Längserstreckungsrichtung
- 1: Extraktions-Vorrichtung
- 2: Extraktions-Raum
- 4: Extraktions-Gehäuse
- 6: Extraktions-Welle
- 6.1: Finger
- 6.2, 6.3: Ausklinkung
- 8: Elektromotor
- 10: Extraktion-Gehäuse
- 10.1, 10.2: Tür
- 12: Extraktions-Raum
- 14a, b: Tür
- 16: Vorzerkleinerung
- 18: erster Bandförderer
- 19: Gewebe- und Folienseperator
- 20: zweiter Bandförderer
- 22: Nachzerkleinerer
- 24: dritter Bandförderer
- 26: zweiter Gewebe- und Foliensortierer
- 28: vierter Bandförderer

## Patentansprüche

1. Extraktions-Vorrichtung (1) zum Aussortieren von strippen-förmigen, bandförmigen oder zumindest wickelfähigen Abfällen (Störstoffen) aus einem Abfall-Stoffstrom, insbesondere einem Holzstrom umfassend vorzugsweise vorwiegend zerkleinertes Holz, wobei der Abfall-Stoffstrom von mindestens einer Vorstufe kommend einen durch die Extraktions-Vorrichtung definierten Extraktions-Raum (2) passiert,
**DADURCH GEKENNZEICHNET,**
**dass** eine sich quer durch den Extraktions-Raum erstreckende Extraktions-Welle (6) vorgesehen ist, welche sich entlang einer Wellenlängsachse erstreckt, beabstandet zueinander angeordnete Wellenenden aufweist sowie mehrere sich beabstandet zueinander im Wesentlichen quer zur Wellenlängsachse erstreckende Extraktions-Finger (6.1) umfasst,
**dass** die Extraktions-Welle (6) drehbar in einem Extraktions-Gehäuse (4) angeordnet ist, welches den Extraktions-Raum (2) vorzugsweise umfänglich an allen Seiten umschließt,
und **dass** zumindest eines der Wellenenden der Extraktions-Welle (6) durch einen Antrieb antreibbar oder angetrieben ist.

2. Extraktions-Vorrichtung (1) nach Anspruch 1,
**DADURCH GEKENNZEICHNET**,
wobei Extraktions-Welle lösbar mit in dem Extraktions-Gehäuse (4, 10) drehbar gelagerten Wellenstümpfen verbindbar oder verbunden ist.

3. Extraktions-Vorrichtung (1) nach Anspruch 2,
**DADURCH GEKENNZEICHNET**,
die lösbare Verbindung der Extraktions-Welle (6) mit den Wellenstümpfen über Arretierbolzen erfolgt.

4. Extraktions-Vorrichtung (1) nach Anspruch 1 oder 2,
**DADURCH GEKENNZEICHNET**,
wobei die Lagerung der Extraktionswelle (6) oder der Wellenstümpfe außerhalb des Extraktionsgehäuses (4, 10) erfolgt.

5. Extraktions-Vorrichtung (1) nach einem der vorgehenden Ansprüche, **DADURCH GEKENNZEICHNET,**
**dass** das Extraktions-Gehäuse (4, 10) mindestens eine bewegliche, vorzugsweise abklappbare Gehäusewand umfasst.

6. Extraktions-Vorrichtung (1) nach einem der vorhergehenden Ansprüche, **DADURCH GEKENNZEICHNET,**
**dass** der Antrieb ein Getriebe mit aufgesetztem oder aufsetzbarem Motor (8) umfasst.

7. Extraktions-Vorrichtung (1) nach einem der vorhergehenden Ansprüche, **DADURCH GEKENNZEICHNET,**
**dass** diese Bestandteile einer Abfall-Sortieranlage ist.

8. Extraktions-Vorrichtung (1) nach Anspruch 7,
**DADURCH GEKENNZEICHNET,**
**dass** diese in einem Fallschacht nach einem Vorbrecher und vor einer Nachzerkleinerung angeordnet ist.

9. Extraktions-Vorrichtung (1) nach einem der vorhergehenden Ansprüche, **DADURCH GEKENNZEICHNET,**
**dass** sich das Extraktions-Gehäuse (4, 10) mit dem darin definierten Extraktions-Raum (2) entlang einer Längserstreckungs- und entlang einer sich quer zur Längserstreckungsrichtung erstreckenden Querrichtung erstreckt und wobei die Extraktions-Welle (6) entlang der Längserstreckungsrichtung bewegbar ist.

10. Extraktions-Vorrichtung (1) nach einem der vorhergehenden Ansprüche, **DADURCH GEKENNZEICHNET,**
**dass** die Stellung der Extraktions-Finger (6.1) im Verhältnis zur oder entlang zur Extraktions-Welle (6) verstellbar sind.

11. Extraktions-Vorrichtung (1) nach einem der vorhergehenden Ansprüche, **DADURCH GEKENNZEICHNET,**
**dass** die Länge der Extraktion-Finger (6.1) verstellbar ist.

12. Abfall-Sortieranlage,
**DADURCH GEKENNZEICHNET,**
**dass** diese mindestens eine der Extraktions-Vorrichtungen (1) gemäß einem der diese betreffenden Ansprüche aufweist.

13. Abfall-Sortieranlage,
**DADURCH GEKENNZEICHNET,**
**dass** diese zwei Extraktions-Vorrichtungen (1) umfasst.
